(19) Europäisches Patentamt
European Patent Office
Office européen des brevets

(11) **EP 3 531 098 B1**

(12) **FASCICULE DE BREVET EUROPEEN**

(45) Date de publication et mention de la délivrance du brevet:
**14.07.2021 Bulletin 2021/28**

(51) Int Cl.:
***G01M 5/00*** *(2006.01)*   ***G01M 7/00*** *(2006.01)*

(21) Numéro de dépôt: **18213321.5**

(22) Date de dépôt: **18.12.2018**

(54) **PROCEDE DE SURVEILLANCE ET DE DETECTION DE LA FORMATION D'UNE DEGRADATION DANS AU MOINS UNE PIECE MOBILE D'UN MECANISME TOURNANT ET SYSTEME ASSOCIE**

ÜBERWACHUNGS- UND ERKENNUNGSVERFAHREN EINER LEISTUNGSVERSCHLECHTERUNG IN MINDESTENS EINEM MOBILEN TEIL EINES DREHMECHANISMUS, UND ENTSPRECHENDES SYSTEM

METHOD FOR MONITORING AND DETECTING THE FORMATION OF DEGRADATION IN AT LEAST ONE MOVING PART OF A ROTATING MECHANISM AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2018 FR 1870202**

(43) Date de publication de la demande:
**28.08.2019 Bulletin 2019/35**

(73) Titulaire: **Airbus Helicopters**
**13725 Marignane Cedex (FR)**

(72) Inventeurs:
• **MOREL, Hervé**
**13113 LAMANON (FR)**
• **RODRIGUEZ, Jonathan**
**21140 VILLENEUVE-SOUS-CHARIGNY (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 3 106 846      WO-A1-2004/065927**
**WO-A1-2015/086959      WO-A2-2004/059399**
**US-A1- 2011 046 929**

**Description**

La présente invention se rapporte au domaine technique des procédés de surveillance de l'usure, de la formation d'une crique ou d'une fissure et/ou d'une rupture structurale dans au moins une pièce mobile d'un mécanisme tournant. Le mécanisme tournant est par ailleurs agencé dans un aéronef, tel que par exemple un giravion, équipé d'au moins un moteur, d'au moins un rotor principal participant à la sustentation, voire également à la propulsion de l'aéronef, et d'au moins une boîte de transmission de puissance principale.

En outre, un tel mécanisme tournant forme alors tout ou partie d'une chaine cinématique de transmission d'un couple moteur et peut être agencé dans la boîte de transmission de puissance principale. Le mécanisme tournant peut notamment être formé par un train épicycloïdal pour entrainer en rotation le(s) rotor(s) principal (principaux) d'un giravion par exemple.

La (ou les) pièce(s) mobile(s) destinée(s) à être surveillée(s) par le procédé et le dispositif de surveillance peu(ven)t alors être l'une au moins des pièces choisies parmi un planétaire, solidaire d'un arbre d'entrée du mécanisme tournant, un (ou des) porte(s) satellites, solidaire(s) d'un arbre de sortie du mécanisme tournant et tout ou partie des satellites munis de paliers tels que notamment des roulements comportant des éléments roulants comme des billes ou des rouleaux à profil cylindrique, conique ou encore toroïdal.

Chaque satellite comporte ainsi un pignon mobile en rotation autour d'un axe de rotation, un tel pignon étant équipé de dents et étant apte à engrener d'une part un pignon denté solidaire du planétaire et d'autre part une couronne fixe.

Dans ce cas, un tel procédé de surveillance et de détection peut alors permettre de détecter une rupture de l'une des dents du (ou des) satellite(s), d'un pignon d'entrée du planétaire et/ou de la couronne fixe, une crique d'un satellite en sous couche mais également une usure prononcée au niveau d'une bague interne ou externe d'un palier équipant un satellite, d'un élément roulant ou encore d'une cage de ce palier.

De façon générale, et tel que décrit dans les documents WO 2015/086959, WO 2004/059399, EP 3 106 846, WO 2004/065927, US 7 325 461, US 7 363 172 et US 2011 0046929, il est connu de surveiller et d'identifier une dégradation dans un mécanisme en mesurant et en analysant un signal vibratoire de fonctionnement du mécanisme.

Cependant, des fausses alarmes peuvent être générées impliquant alors un arrêt inutile, voire un démontage, pour le mécanisme tournant.

En outre, de tels procédés ne sont généralement pas adaptés à la surveillance de mécanismes tournants comportant par exemple un train épicycloïdal avec plusieurs satellites.

La présente invention a alors pour objet de proposer un procédé et un dispositif permettant de s'affranchir des limitations mentionnées ci-dessus. Par ailleurs, le procédé selon l'invention peut également permettre d'identifier dans un train épicycloïdal défaillant, quel est le satellite qui présente une usure prononcée ou une quelconque anomalie structurale, telle une rupture de dent, un écaillage d'une piste de roulement ou encore une crique en formation.

L'invention se rapporte donc à un procédé de surveillance et de détection de la formation d'une dégradation dans au moins une pièce mobile d'un mécanisme tournant formant tout ou partie d'une chaine cinématique de transmission d'un couple moteur, le mécanisme tournant équipant un aéronef et le procédé comportant :

- au moins une première étape de mesure comportant une mesure des vibrations suivant au moins une direction et générant un signal vibratoire de fonctionnement du mécanisme tournant en fonction du temps, la première étape de mesure étant réalisée au moyen d'au moins un capteur vibratoire solidarisé avec un carter fixe de l'aéronef et éventuellement agencé à proximité du mécanisme tournant à savoir dans une zone permettant au capteur vibratoire de mesurer les vibrations,

- au moins une seconde étape de mesure comportant une mesure d'une position angulaire de la (ou des) pièce(s) mobile(s), la (ou les) pièce(s) mobile(s) comportant au moins un degré de liberté en rotation autour d'un axe de rotation.

Selon l'invention, un tel procédé est remarquable en ce qu'il comporte au moins :

- une étape de prétraitement pour calculer une variance synchrone des vibrations du signal vibratoire mesurées par le (ou les) capteur(s) vibratoire(s) sur un cycle d'un nombre prédéterminé n de rotations de la (ou des) pièce(s) mobile(s) respectivement autour du (ou des) axe(s) de rotation, la variance synchrone étant déterminée à partir d'une moyenne des écarts au carré entre une valeur de vibration mesurée à un instant prédéterminé et une valeur moyenne du signal vibratoire calculée au même instant prédéterminé,

- une étape de cartographie pour générer au moins deux cartographies $M_1$, $M_2$ représentatives respectivement d'une valeur de la variance synchrone en fonction d'une part de la position angulaire de la (ou des) pièce(s) mobile(s) et d'autre part d'une plage d'harmoniques prédéterminés du signal vibratoire, les au moins deux cartographies $M_1$, $M_2$ correspondant respectivement à des acquisitions successives de la variance synchrone à au moins deux instants $t_1$, $t_2$ distincts l'un de l'autre,

- une étape d'analyse pour comparer les valeurs de la variance synchrone entre au moins deux cartographies $M_1$, $M_2$ successives, l'étape d'analyse permettant de générer un indicateur CI en fonction d'une comparaison entre une première cartographie $M_1$ de la variance synchrone à un premier instant $t_1$ et une deuxième cartographie $M_2$ de la variance synchrone à un deuxième instant $t_2$ postérieur au premier instant $t_1$, et

- une étape d'alarme pour générer une alarme lorsqu'une valeur courante $CI_{t1}$, $CI_{t2}$ de l'indicateur CI dépasse une valeur de seuil prédéterminée correspondant à la dégradation dans la (ou les) pièce(s) mobile(s) du mécanisme tournant.

Autrement dit, un tel procédé permet notamment de surveiller et de détecter une anisotropie dans la (ou les) pièce(s) mobile(s) à partir d'une acquisition des accélérations produites et transmises au carter fixe de l'aéronef lors du fonctionnement du mécanisme tournant. Ce carter fixe peut être solidarisé ou servir de support à une pièce fixe du mécanisme tournant, telle que notamment une couronne externe fixe munie de dents d'un train épicycloïdal.

Par ailleurs, l'analyse du signal vibratoire peut permettre d'identifier des variations d'une raideur d'engrènement de la (ou des) pièce(s) mobile(s) à chacune de ses rotations. La mesure des accélérations est donc synchronisée soit avec la mesure de la position angulaire de chaque pièce mobile respectivement autour de son axe de rotation ou soit avec la position angulaire de l'une seulement des pièces mobiles constituant le mécanisme tournant.

Par exemple, une signature vibratoire de la dégradation sur une pièce mobile, telle un satellite d'un train épicycloïdal, peut ainsi être identifiée par une variation locale de la raideur d'engrènement entre les dents de ce satellite avec celles d'une couronne fixe et/ou d'un pignon d'entrée du planétaire.

De plus, l'étape de prétraitement pour calculer une variance synchrone des accélérations peut comporter une sous-étape consistant à rééchantillonner de manière synchrone le signal vibratoire avec la mesure de la position angulaire d'un porte-satellites du train épicycloïdal. Cette sous-étape de rééchantillonnage permet ainsi de rendre synchrones entre elles les différentes acquisitions des accélérations de la (ou des) pièce(s) mobile(s) surveillée(s).

L'étape de prétraitement peut également comporter une sous-étape de calcul permettant de calculer une moyenne synchrone sur un cycle de rotations de la (ou des) pièce(s) mobile(s) surveillée(s) tel un porte-satellites. Classiquement, cette valeur moyenne calculée est déterminée pour un tour de la (ou des) pièce(s) mobile(s) à partir d'une somme des vibrations mesurées sur le nombre prédéterminé n de rotations. Un tel nombre n peut être choisi comme étant un nombre entier supérieur ou égal à 2.

De cette manière, l'étape de prétraitement permet d'éliminer l'influence du bruit de mesure et les harmoniques non synchrones de la (ou des) pièce(s) mobile(s). Un cycle est alors défini par un nombre prédéterminé n de rotations du porte-satellites nécessaires pour qu'une dent d'un satellite se positionne à nouveau en regard d'une même dent appartenant à une couronne fixe. Dans ce cas, le nombre prédéterminé n correspond alors au nombre de positions angulaires possibles d'un satellite.

L'étape de prétraitement peut ensuite comporter une sous-étape de calcul pour calculer une transformée de Fourrier rapide glissante à partir du signal vibratoire acquis. Une telle transformée de Fourrier est ainsi de longueur constante et correspond à un angle $\alpha$ « d'observation » de passage de la (ou des) pièce(s) mobile(s) surveillée(s). Cette sous-étape de calcul permet alors de fournir une pluralité de cartographies d'accélérations, un axe d'abscisse correspondant à la valeur angulaire selon une révolution de la (ou des) pièce(s) mobile(s) surveillée(s) telle que le porte-satellites, un axe d'ordonnées correspondant à une plage prédéterminée entre deux harmoniques de la transformée de Fourrier et les mesures des accélérations étant calculées par la transformée de Fourrier glissante.

Par suite, l'étape de cartographie permet quant à elle de déterminer la variance synchrone, soit la variance point à point de la pluralité de cartographies d'accélérations calculées pour chacune des n positions possibles de la (ou des) pièce(s) mobile(s) surveillée(s). Une telle étape de prétraitement permet alors de réduire, voire d'éliminer, l'impact des harmoniques synchrones du mécanisme tournant, ne laissant apparaitre que les anomalies observables sur une partie des n révolutions d'un porte-satellites du train épicycloïdal, à l'image par exemple d'une modification de raideur locale de la denture d'un satellite de train épicycloïdal.

Avantageusement, l'étape de prétraitement peut être effectuée à bord de l'aéronef, le procédé comportant une étape de transmission de données permettant une transmission des données représentatives de la variance synchrone à au moins une station sol, les étapes de cartographie, d'analyse et d'alarme étant quant à elles effectuées au sol en tout ou partie avec la station sol.

L'étape de prétraitement permet alors de réduire la taille des données collectées en vol préalablement à leur stockage dans une mémoire embarquée à bord de l'aéronef.

Par ailleurs, chaque cycle peut être effectué durant une phase de vol prédéterminée, à savoir qu'elle doit permettre un nombre minimal de mesures des accélérations par heure de vol afin de garantir une performance de détection de la présence d'une dégradation dans la (ou les) pièce(s) mobile(s). Un tel procédé peut également nécessiter une stabilité des paramètres de vol de l'aéronef et par exemple s'effectuer à une vitesse de rotation du rotor principal constante et/ou à un couple moteur d'entrainement du rotor principal constant.

Une fois l'aéronef au sol, les données contenues dans cette mémoire sont transmises à la station sol qui peut les traiter puis les analyser pour générer, le cas échéant, une alarme permettant à une équipe de maintenance d'effectuer au moins un contrôle de la dégradation de la (ou des) pièce(s) mobile(s) surveillée(s).

En outre, une telle station sol peut être formée par exemple par un ou plusieurs ordinateur(s) connectés entre eux et comporter un ou plusieurs serveur(s) avec une connexion vers un réseau internet permettant une communication entre les différents ordinateur(s) et/ou serveur(s) formant cette station sol.

En pratique, l'étape de cartographie peut comporter, pour chacune des cartographies $M_1$, $M_2$, une sous-étape de normalisation des valeurs de la variance synchrone, la sous-étape de normalisation permettant d'assigner une valeur égale à 0 à des pixels représentatifs d'un minimum de la variance synchrone et une valeur égale à 1 à des pixels représentatifs d'un maximum de la variance synchrone, la sous-étape de normalisation permettant également d'assigner une valeur comprise entre 0 et 1 à l'ensemble des autres pixels représentatifs d'une valeur comprise entre le minimum et le maximum de la variance synchrone.

Une telle sous-étape de normalisation permet ainsi de rendre l'étape de cartographie indépendante des éventuelles actions de maintenance et notamment par exemple des opérations de montage ou de démontage du (ou des) capteur(s) vibratoire(s) ou encore de montage ou de démontage d'un mât rotor dans le cas d'un giravion.

Selon un exemple de réalisation avantageux de l'invention, l'étape de cartographie peut comporter, pour chacune des cartographies $M_1$, $M_2$, une sous-étape de discrétisation permettant d'affecter une valeur égale 0 à chaque pixel représentatif initialement d'une valeur de la variance synchrone inférieure à une valeur de seuil prédéterminée h et d'affecter une valeur égale 1 à chaque pixel représentatif initialement d'une valeur de la variance synchrone supérieure ou égale à la valeur de seuil prédéterminée h.

En outre, une telle valeur de seuil prédéterminée h peut être déterminée par des tests et/ou des simulations et être par exemple avantageusement choisie égale à 0,5. Cette valeur de seuil prédéterminée h peut également être variable en fonction de critères tels que par exemple l'énergie totale contenue dans une cartographie considérée. Cette sous-étape de discrétisation permet alors de générer des cartographies permettant une analyse restreinte aux seules valeurs de la variance synchrone supérieures à la valeur de seuil prédéterminée h.

Avantageusement, l'étape de cartographie peut comporter une sous-étape de classification pour classer en au moins deux classes C1, C2 au moins deux formes composées de pixels juxtaposés appartenant à la pluralité de cartographies $M_1$, $M_2$, les pixels étant affectés respectivement chacun d'une valeur égale 1, la sous-étape de classification permettant d'identifier au moins deux groupes de pixels et de classer les groupes

suivant un ordre décroissant fonction d'un nombre de pixels juxtaposés affectés d'une valeur égale à 1 les constituant respectivement, une première classe C1 correspondant à un premier groupe G1 et une deuxième classe C2 correspondant à un deuxième groupe G2 présentant un nombre de pixels juxtaposés affectés d'une valeur égale à 1 inférieur au nombre de pixels juxtaposés affectés d'une valeur égale à 1 du premier groupe G1.

Autrement dit, une telle sous-étape de classification permet de notamment de quantifier un ensemble de surfaces par une méthode d'analyse en composantes connexes. Une telle méthode d'analyse de traitement d'images permet ainsi d'identifier des groupes de pixels G1, G2 connectés les uns aux autres formant ces composantes connexes au moyen d'une identification des surfaces répondant à un critère de « 4-connexité » conformément au domaine mathématique de la topologie algébrique et plus précisément en théorie de l'homotopie.

La sous-étape de classification permet alors d'attribuer à chacun des groupes de pixels G1, G2, une classe par ordre décroissant d'énergie C1, C2. Le calcul de l'énergie par surface de chacun des groupes de pixels G1, G2 peut être déterminé, par exemple, par le nombre de pixels les constituant ou par une énergie calculée par projection pour chacune des cartographies $M_1$, $M_2$.

Par exemple, une telle sous-étape de classification permet d'affecter à chaque cartographie $M_1$, $M_2$ huit classes C1 à C8 représentées chacune par un niveau de couleur. Chaque classe C1 à C8 correspond alors à un groupe isolé de pixels G1 à G8 dont l'attribut est affecté par ordre décroissant : C1 correspondant au groupe de pixels G1 présentant l'énergie la plus élevée et C8 correspondant au groupe de pixels G8 présentant l'énergie énergie la plus faible.

En pratique, pour chacune des cartographies $M_1$, $M_2$, la sous-étape de classification peut regrouper dans un même groupe des pixels affectés d'une valeur égale à 1 formant un premier sous-groupe de pixels comportant au moins un pixel affecté d'une valeur égale à 1 touchant en abscisse l'origine de la cartographie $M_1$, $M_2$ et correspondant à une position angulaire de la (ou des) pièce(s) mobile(s) supérieure à 0 radian et des pixels affectés d'une valeur égale à 1 formant un second sous-groupe de pixels comportant au moins un pixel affecté d'une valeur égale à 1 touchant en abscisse une valeur de $2\pi$ radians de la cartographie $M_1$, $M_2$ et correspondant à une position angulaire de la (ou des) pièce(s) mobile(s) inférieure à $2\pi$ radians, le (ou les) pixel(s) du premier sous-groupe présentant, à l'abscisse correspondant à la position angulaire de la (ou des) pièce(s) mobile(s) égale à 0 radian, une valeur d'harmonique égale à celle du (ou des) pixel(s) du second sous-groupe à la position angulaire de la (ou des) pièce(s) mobile(s) égale à $2\pi$ radians.

En d'autres termes, dans le cas d'un mécanisme tournant formé par un train épicycloïdal, l'abscisse de chacune des cartographies $M_1$, $M_2$ correspond au nombre de dents de la couronne fixe, or celle-ci étant cylindrique, chaque cartographie peut également être considérée comme un cylindre déroulé. La colonne d'abscisse 0 radian est alors voisine de la colonne d'abscisse $2\pi$ radians. De ce fait, les groupes de pixels G1, G2 en limites et voisines à iso-ordonnée peuvent être affectés à une classe identique.

Selon un exemple de réalisation avantageux de l'invention, l'étape d'analyse peut comporter une première sous-étape de calcul consistant à calculer, dans une superposition de la première cartographie $M_1$ avec la deuxième cartographie $M_2$, respectivement pour chaque classe C1, C2 une surface d'intersection S3 entre une première forme F1 correspondant à la classe C1, C2 de la première cartographie $M_1$ et une deuxième forme F2 correspondant à la classe C1, C2 de la deuxième cartographie $M_2$.

Autrement dit, une telle surface d'intersection S3 est calculée, pour chacune des différentes classes C1, C2, en comparant la taille et le positionnement relatifs entre une première forme F1 correspondant à un premier groupe de pixels G1 sur la première cartographie $M_1$ avec une deuxième forme F2 du même premier groupe de pixels G1 sur la deuxième cartographie $M_2$.

Avantageusement, l'étape d'analyse peut comporter une deuxième sous-étape de calcul consistant à calculer, dans la superposition de la première cartographie $M_1$ avec la deuxième cartographie $M_2$, respectivement pour chaque classe C1, C2 une surface d'exclusion S4 entre une première forme F1 correspondant à la classe C1, C2 de la première cartographie $M_1$ et une deuxième forme F2 correspondant à la classe C1, C2 de la deuxième cartographie $M_2$, la surface d'exclusion S4 étant égale à la somme entre une première surface S1 de la première forme F1 et une deuxième surface S2 de la deuxième forme F2 à laquelle la surface d'intersection S3 est retranchée.

Bien entendu comme précédemment, une telle surface d'exclusion S4 peut également être déterminée, pour chacune des différentes classes C1, C2, en comparant la taille et le positionnement relatifs entre une première forme F1 correspondant à un premier groupe de pixels G1 sur la première cartographie $M_1$ avec une deuxième forme F2 du même premier groupe de pixels G1 sur la deuxième cartographie $M_2$.

En pratique, l'étape d'analyse peut comporter une troisième sous-étape de calcul consistant à calculer un score P égal à la différence entre la surface d'intersection S3 et la surface d'exclusion S4.

Par suite, lorsque le score P est négatif, on en déduit que les formes F1, F2 d'un même groupe de pixels G1 ou G2 sont peu ou pas stationnaires dans les différentes cartographies $M_1$, $M_2$. Un tel phénomène peut alors être causé notamment par la présence de bruits uniquement dans l'une des cartographies $M_1$, $M_2$ qui révèle un caractère isotrope de la (ou des) pièce(s) mobile(s). Alternativement, un tel score P négatif peut également être le signe que la (ou des) pièce(s) mobile(s) n'est (ne sont) pas dégradée(s).

En revanche, lorsque le score P est positif, on en déduit alors que les formes F1, F2 d'un même groupe de pixels G1 ou G2 sont stationnaires dans les différentes cartographies $M_1$, $M_2$. De cette manière, on peut identifier une émergence locale de la variance harmonique dans le bruit des différentes cartographies $M_1$, $M_2$. Un tel phénomène est alors le signe d'un caractère anisotrope de la (ou des) pièce(s) mobile(s). Alternativement, un tel score P positif peut être dû à une dégradation d'une (ou des) pièce(s) mobile(s).

Selon un exemple de réalisation avantageux de l'invention, l'étape d'analyse peut comporter une quatrième sous-étape de calcul consistant à calculer respectivement pour chaque classe C1, C2, des valeurs courantes $CI_{t1}$, $CI_{t2}$ de l'indicateur CI par itération, une deuxième valeur courante $CI_{t2}$ de l'indicateur CI correspondant à la deuxième cartographie $M_2$ étant égale à un maximum entre la valeur 0 et la somme entre d'une part une première valeur courante $CI_{t1}$ de l'indicateur CI correspondant à la première cartographie $M_1$ et d'autre part un produit entre le score P et le temps écoulé dt entre les instants $t_2$ et $t_1$, conformément à l'équation :

$$CI_{t2} = \max([0, CIt_1 + P.dt])$$

avec dt = $t_2$-$t_1$.

Autrement dit, une élévation de l'indicateur CI indique la présence d'une forme stationnaire F1, F2 dans les cartographies $M_1$, $M_2$ qui est alors interprétée comme l'émergence locale d'une variance harmonique et donc d'une anisotropie d'une (ou des) pièce(s) mobile(s). Dans le cas contraire, la stagnation de l'indicateur CI au voisinage de 0 indique la présence de bruits dans les cartographies $M_1$, $M_2$, donc d'une (ou de) pièce(s) mobile(s) saine(s).

La présente invention a aussi pour objet un système de surveillance et de détection de la formation d'une dégradation dans au moins une pièce mobile d'un mécanisme tournant formant tout ou partie d'une chaine cinématique de transmission d'un couple moteur, le mécanisme tournant équipant un aéronef, le système comportant :

- au moins un capteur vibratoire pour mesurer des vibrations suivant au moins une direction et générer un signal vibratoire de fonctionnement du mécanisme tournant en fonction du temps, le(s) capteur(s) vibratoire(s) étant solidarisé(s) avec un carter fixe de l'aéronef et avantageusement agencé(s) à proximité du mécanisme tournant,
- au moins un organe de mesure pour mesurer une position angulaire de la (ou des) pièce(s) mobile(s), la (ou les) pièce(s) mobile(s) comportant au moins un degré de liberté en rotation autour d'un axe de rotation.

Selon l'invention, un tel système est remarquable en ce qu'il comporte au moins :

- une unité de prétraitement pour calculer une variance synchrone des vibrations du signal vibratoire mesurées par le(s) capteur(s) vibratoire(s) sur un cycle d'un nombre prédéterminé n de rotations de la (ou des) pièce(s) mobile(s) respectivement autour du (ou des) axe(s) de rotation, la variance synchrone correspondant à une moyenne des écarts au carré entre une valeur de vibration mesurée à un instant prédéterminé et une valeur moyenne calculée au même instant prédéterminé, la valeur moyenne calculée étant déterminée pour une rotation de la (ou des) pièce(s) mobile(s) à partir d'une somme des accélérations mesurées sur le nombre prédéterminé n de rotations,

- une unité de cartographie pour générer au moins deux cartographies $M_1$, $M_2$ représentatives respectivement d'une valeur de la variance synchrone en fonction d'une part de la position angulaire de la (ou des) pièce(s) mobile(s) et d'autre part d'une plage d'harmoniques prédéterminés du signal vibratoire, les au moins deux cartographies $M_1$, $M_2$ correspondant respectivement à des acquisitions successives de la variance synchrone à au moins deux instants $t_1$, $t_2$ distincts l'un de l'autre,

- une unité d'analyse pour comparer les valeurs de la variance synchrone entre au moins deux cartographies $M_1$, $M_2$ successives, l'unité d'analyse permettant de générer un indicateur CI en fonction d'une comparaison entre une première cartographie $M_1$ de la variance synchrone à un premier instant $t_1$ et une deuxième cartographie $M_2$ de la variance synchrone à un deuxième instant $t_2$ postérieur au premier instant $t_1$, et

- une unité d'alarme pour générer une alarme lorsqu'une valeur courante $CI_{t1}$, $CI_{t2}$ de l'indicateur CI dépasse une valeur de seuil prédéterminée correspondant à la dégradation dans la (ou les) pièce(s) mobile(s) du mécanisme tournant.

Autrement dit, le capteur vibratoire peut par exemple être de type piézoélectrique et détecter les accélérations générées lors d'un fonctionnement en rotation de la (ou des) pièce(s) mobile(s) d'un train épicycloïdal équipant un aéronef. Un tel capteur vibratoire peut en outre être solidarisé avec le carter fixe présentant une couronne fixe dentée du train épicycloïdal.

L'organe de mesure pour mesurer une position angulaire de la (ou des) pièce(s) mobile(s) peut quant à lui comprendre un capteur optique ou magnétique de type codeur et présentant un disque cranté telle une roue phonique solidaire par exemple d'un porte-satellites du train épicycloïdal.

L'unité de prétraitement peut également être agencée en tout ou partie sur l'aéronef de manière à limiter la quantité de données acquises par le capteur vibratoire et l'organe de mesure afin de faciliter leurs stockages dans une mémoire embarquée.

Une fois la mission de l'aéronef terminée, les valeurs de la variance synchrone mesurées à partir de le(s) capteur(s) vibratoire(s) sur un cycle d'un nombre prédéterminé n de rotations de la (ou des) pièce(s) mobile(s) respectivement autour du (ou des) axe(s) de rotation peuvent être transmises à l'unité de cartographie pour générer les au moins deux cartographies $M_1$, $M_2$ représentatives respectivement des valeurs de la variance synchrone.

Ainsi, selon une première variante de l'invention, l'unité de cartographie, l'unité d'analyse et l'unité d'alarme peuvent être agencées dans une station sol chez un exploitant de l'aéronef et/ou chez le fabriquant de l'aéronef qui peut alors alerter l'exploitant de l'aéronef d'une dégradation affectant la (ou les) pièce(s) mobile(s) du mécanisme tournant.

Selon une seconde variante de l'invention, l'unité de cartographie peut être embarquée à bord de l'aéronef. Dans ce cas, l'unité de cartographie peut générer les au moins deux cartographies $M_1$, $M_2$ représentatives respectivement des valeurs de la variance synchrone pendant la mission de l'aéronef.

Une fois la mission de l'aéronef terminée, on transmet alors au sol les au moins deux cartographies $M_1$, $M_2$ à l'unité d'analyse. Ainsi, l'unité d'analyse et l'unité d'alarme peuvent quant à elles être agencées dans une station sol chez un exploitant de l'aéronef et/ou chez le fabriquant de l'aéronef.

L'invention et ses avantages apparaîtront avec plus de détails dans le cadre de la description qui suit avec des exemples de réalisation donnés à titre illustratif en référence aux figures annexées qui représentent :

- la figure 1, une vue de côté d'un aéronef comportant notamment un mécanisme tournant et au moins une pièce mobile destinée à être surveillée, conformément à l'invention,

- la figure 2, un schéma de principe illustrant un système de surveillance et de détection de la formation d'une dégradation dans au moins une pièce mobile, conformément à l'invention,

- les figures 3 et 4, des logigrammes illustrant deux exemples de réalisation du procédé de surveillance et de détection de la formation d'une dégradation dans au moins une pièce mobile d'un mécanisme tournant, conformément à l'invention,

- la figure 5, un logigramme illustrant en détail les sous-étapes d'une étape de cartographie du procédé de surveillance et de détection, conformément à l'invention,

- la figure 6, un logigramme illustrant en détail les sous-étapes d'une étape d'analyse du procédé de surveillance et de détection, conformément à l'invention,

- la figure 7, une cartographie illustrant, à un instant $t_1$, les valeurs non normalisées d'une variance synchrone du signal vibratoire mesurées lors du fonctionnement de la (ou des) pièce(s) mobile(s) du mécanisme tournant, conformément à l'invention,

- la figure 8, une cartographie illustrant, à un instant $t_1$, les valeurs normalisées d'une variance synchrone du signal vibratoire mesurées lors du fonctionnement de la (ou des) pièce(s) mobile(s) du mécanisme tournant, conformément à l'invention,

- la figure 9, une cartographie illustrant, à un instant $t_1$, les valeurs normalisées et discrétisées d'une variance synchrone du signal vibratoire mesurées lors du fonctionnement de la (ou des) pièce(s) mobile(s) du mécanisme tournant, conformément à l'invention,

- la figure 10, une cartographie illustrant, à un instant $t_1$, différentes classes de valeurs normalisées et discrétisées d'une variance synchrone du signal vibratoire mesurées lors du fonctionnement de la (ou des) pièce(s) mobile(s) du mécanisme tournant, conformément à l'invention, et

- les figures 11 et 12, des schémas illustrant deux exemples de superpositions respectivement de deux formes représentatives d'une même classe, conformément à l'invention,

Les éléments présents dans plusieurs figures distinctes sont affectés d'une seule et même référence.

Comme déjà évoqué l'invention se rapporte à un procédé de surveillance et de détection de la formation d'une dégradation dans au moins une pièce mobile d'un mécanisme tournant.

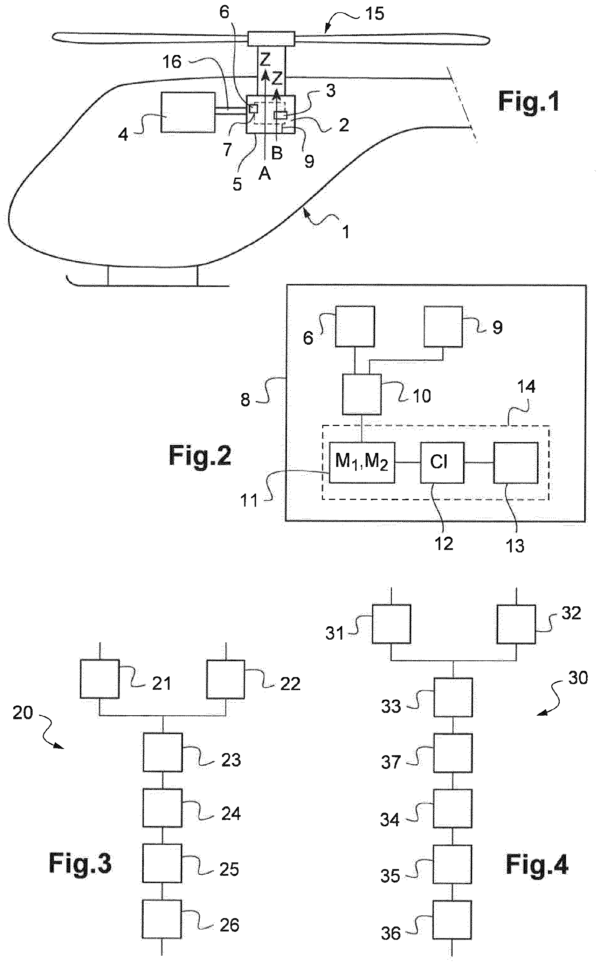

Tel que représenté à la figure 1, un tel mécanisme tournant 2 équipe un aéronef 1 ici représenté à titre d'exemple par un giravion. Le mécanisme tournant 2, formant tout ou partie d'une chaîne cinématique de transmission d'un couple moteur, peut ainsi être agencé dans une boîte de transmission de puissance principale 5 et permet alors d'entrainer en rotation un rotor principal 15 à une vitesse de rotation réduite avec un arbre de transmission 16 tournant à une vitesse de rotation élevée.

Ainsi, un tel mécanisme tournant 2 peut notamment comprendre un train épicycloïdal de la boîte de transmission de puissance principale 5 et peut comporter au moins une pièce mobile 3 formée par exemple par un satellite du train épicycloïdal.

Comme déjà évoqué, un tel train épicycloïdal comporte un pignon de planétaire, des satellites portés chacun par un porte-satellites et une couronne fixe. Chaque porte-satellites tourne sur lui-même par rapport à la couronne fixe autour d'un axe de rotation Az.

Chaque satellite tourne quant à lui d'une part sur lui-même autour d'un axe de rotation Bz et d'autre part autour de l'axe de rotation Az du porte-satellites lors de la rotation du port-satellites.

En outre, un capteur vibratoire 6 est solidarisé avec un carter fixe 7 de l'aéronef 1, tel que par exemple le carter d'une couronne fixe d'un train épicycloïdal et est agencé à proximité du mécanisme tournant 2.

Ce capteur vibratoire 6 peut notamment être formé par un accéléromètre choisi parmi les accéléromètres du type à détection piézoélectrique, à détection piézorésistive, à jauge de déformation/extensométrie, à détection capacitive, à détection inductive, à détection optique, à poutre vibrante, à ondes de surface ou encore à émission acoustique.

Un tel capteur vibratoire 6 permet alors de mesurer des accélérations images de vibrations produites lors du fonctionnement du mécanisme tournant 2 suivant au moins une direction et de générer un signal vibratoire représentatif des vibrations subies par le carter fixe 7 en fonction du temps.

Un organe de mesure 9 d'une position angulaire permet quant à lui de mesurer, directement ou indirectement, une position angulaire de la (ou des) pièce(s) mobile(s) 3, chaque pièce mobile 3 comportant au moins un degré de liberté en rotation autour d'un axe de rotation Az et/ou Bz.

Un tel organe de mesure 9 peut quant à lui comprendre un capteur optique ou magnétique de type codeur et présentant un disque cranté telle une roue phonique solidaire par exemple d'un porte-satellites du train épicycloïdal.

Tel que représenté à la figure 2, l'invention se rapporte également à un système 8 de surveillance et de détection de la formation d'une dégradation dans la (ou les) pièce(s) mobile(s) 3.

Ce système 8 inclut une unité de prétraitement 10 comportant par exemple au moins un ordinateur, un calculateur ou un processeur. Une telle unité de prétraitement 10 est reliée par une liaison filaire ou non filaire au capteur vibratoire 6 et à l'organe de mesure 9. Les données acquises par le capteur vibratoire 6 et l'organe de mesure 9 sont alors transmises à l'unité de prétraitement 10. Cette unité de prétraitement 10 permet de calculer une valeur de la variance synchrone du signal vibratoire mesurée par le capteur vibratoire 6 sur un cycle d'un nombre prédéterminé n de rotations de la (ou des) pièce(s) mobile(s) 3 autour de son (leurs) axe(s) de rotation respectif(s) Az et/ou Bz.

Cette variance synchrone est déterminée à partir d'une moyenne des écarts au carré entre une valeur courante d'accélération et une valeur moyenne d'accélération calculée pour une rotation de la (ou des) pièce(s) mobile(s) 3 à partir des valeurs de l'accélération sur le nombre prédéterminé n de rotations.

De plus le système 8 peut comporter une station sol 14 comportant par exemple au moins un ordinateur, un calculateur ou un processeur. Une telle station sol 14 est reliée par une liaison non filaire à l'unité de prétraitement 10.

Une fois le prétraitement des données effectué à bord de l'aéronef 1, ces données représentatives des valeurs de la variance synchrone sont transmises le cas échéant à la station sol 14 ou traitées dans l'aéronef. La station sol 14 ou l'aéronef comporte notamment une unité de cartographie 11 permettant de générer au moins deux cartographies $M_1$, $M_2$ représentatives respectivement des variations des valeurs de la variance synchrone du signal vibratoire en fonction d'une part de la position angulaire de la (ou des) pièce(s) mobile(s) 3 et d'autre part d'une plage d'harmoniques prédéterminés correspondant au signal vibratoire. En outre, ces au moins deux cartographies $M_1$, $M_2$ correspondent respectivement à des acquisitions successives des valeurs de la variance synchrone des accélérations à au moins deux instants $t_1$, $t_2$ distincts l'un de l'autre, par exemple des instants correspondant à la fin de deux cycles distincts.

Ainsi, le système 8 comporte une unité de cartographie 11 comportant par exemple au moins un ordinateur, un calculateur ou un processeur. Une telle unité de cartographie 11 est reliée par une liaison non filaire à l'unité de prétraitement 10.

Les cartographies $M_1$, $M_2$ peuvent être illustrées en deux dimensions en affectant à des pixels différentes couleurs ou différentes textures en fonction d'une valeur de la variance synchrone. En outre, de tels pixels correspondent à des surfaces délimitées entre d'une part, en abscisse, deux unités de la position angulaire de la (ou des) pièce(s) mobile(s) 3 et d'autre part, en ordonnée, deux unités d'harmoniques.

De plus, le système 8 comporte une unité d'analyse 12 comportant par exemple au moins un ordinateur, un calculateur ou un processeur. Une telle unité d'analyse 12 est reliée par une liaison filaire ou non filaire à l'unité de cartographie 11.

En outre, l'unité de cartographie 11 et l'unité d'analyse 12 peuvent être formées par un seul et même ordinateur, calculateur ou processeur.

De telles cartographies $M_1$, $M_2$ peuvent alors être transmises à l'unité d'analyse 12 de la station sol 14 ou traitées en vol de manière à analyser des valeurs de la variance synchrone des accélérations entre au moins deux cartographies $M_1$, $M_2$ successives. Une telle unité d'analyse 12 peut alors générer un indicateur CI en fonction d'une comparaison entre une première cartographie $M_1$ des valeurs de la variance synchrone des accélérations mesurées à un premier instant $t_1$ et une deuxième cartographie $M_2$ des valeurs de la variance synchrone des accélérations mesurées à un deuxième instant $t_2$ postérieur au premier instant $t_1$.

Enfin, une fois l'indicateur CI généré, une unité d'alarme 13 de la station sol 14 peut alors générer une alarme si une valeur courante $CI_{t1}$, $CI_{t2}$ de l'indicateur CI dépasse une valeur de seuil prédéterminée correspondant à une dégradation dans la (ou des) pièce(s) mobile(s) 3 du mécanisme tournant 2. Une telle unité d'alarme 13 peut par exemple comprendre un haut-parleur pour émettre un signal sonore, une source lumineuse pour émettre un signal lumineux et/ou visuel et/ou un module de communication pour générer un message textuel électronique tel que notamment un courrier électronique ou encore un "SMS" selon l'acronyme en langue anglaise correspondant à l'expression "Short Message Service".

Selon une première réalisation de l'invention illustrée à la figure 3, un procédé 20 de surveillance et de détection de la formation d'une dégradation dans une pièce mobile 3 d'un mécanisme tournant 2 comporte ainsi une première étape de mesure 21 pour mesurer les accélérations d'un carter fixe de l'aéronef 1 lors du fonctionnement du mécanisme tournant 2 à l'aide du capteur vibratoire 6 et une deuxième étape de mesure 22 pour mesurer une position angulaire de la (ou des) pièce(s) mobile(s) 3.

De telles première et deuxième étapes de mesure 21, 22 sont par exemple opérées simultanément et en parallèle.

Le procédé 20 comporte ensuite une étape de prétraitement 23 pour calculer la variance synchrone des vibrations mesurées sur un cycle d'un nombre prédéterminé n de rotations de la (ou des) pièce(s) mobile(s) 3 autour de son (leurs) axe(s) de rotation (respectifs), une étape de cartographie 24 pour générer les au moins deux cartographies $M_1$, $M_2$, une étape d'analyse 25 des variations de la variance synchrone entre les au moins deux cartographies $M_1$, $M_2$ successives et une étape d'alarme 26 pour signaler la présence d'une dégradation dans la (ou les) pièce(s) mobile(s) 3. Dans cette première réalisation de l'invention, l'étape de prétraitement 23, l'étape de cartographie 24, l'étape d'analyse 25 et l'étape d'alarme 26 peuvent être opérées et réalisées en vol par au moins un ordinateur, un calculateur ou un processeur agencé à bord de l'aéronef 1.

Selon une deuxième réalisation de l'invention telle que représentée à la figure 4, un procédé 30 de surveillance et de détection de la formation d'une dégradation dans une pièce mobile 3 d'un mécanisme tournant 2 peut comporter également une première étape de mesure 31 pour mesurer les vibrations de fonctionnement du mécanisme tournant 2 à l'aide du capteur vibratoire 6 et une deuxième étape de mesure 32 pour mesurer une position angulaire de la (ou des) pièce(s) mobile(s) 3.

Comme précédemment, le procédé 30 comporte ensuite une étape de prétraitement 33 opéré en vol lors d'une mission de l'aéronef 1 pour calculer la variance synchrone des accélérations lors du fonctionnement de la (ou des) pièce(s) mobile(s) 3, une étape de transmission 37 de données pour transmettre des données représentatives de la variance synchrone des accélérations à la station sol 14.

Enfin comme précédemment, le procédé 30 comporte alors une étape de cartographie 34 pour générer les au moins deux cartographies $M_1$, $M_2$, une étape d'analyse 35 des variations de la variance synchrone des accélérations entre les au moins deux cartographies $M_1$, $M_2$ successives et une étape d'alarme 36 pour signaler la présence d'une dégradation dans la (ou les) pièce(s) mobile(s) 3. De telles étapes de cartographie 34 d'analyse 35 et d'alarme 36 sont alors mises en œuvre dans la station sol 14 chez l'exploitant et/ou chez le fabricant de l'aéronef 1.

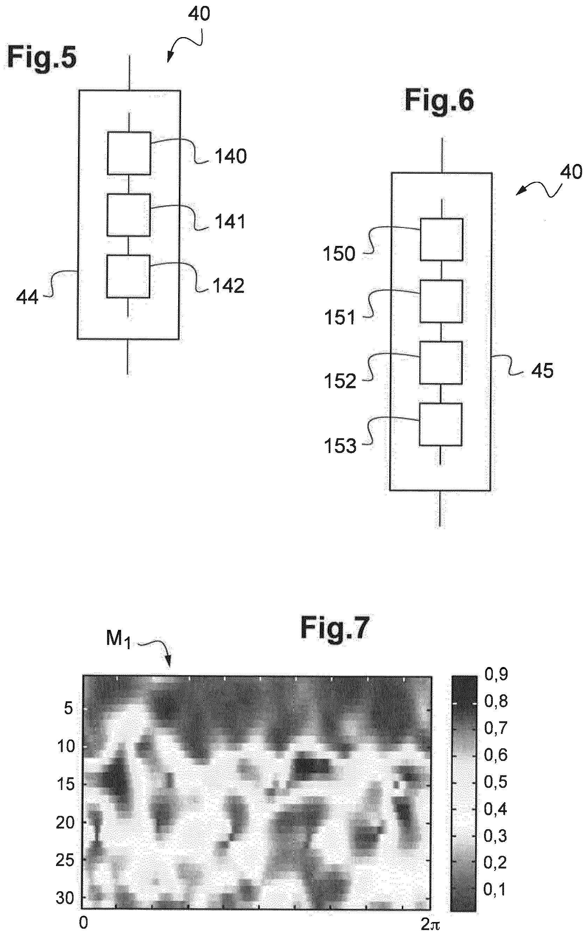

Quelle que soit la réalisation, une telle cartographie $M_1$ est alors telle que représentée à la figure 7. Chaque cartographie illustre en effet les différentes valeurs de la variance synchrone des accélérations dans un diagramme en deux dimensions. Ce diagramme présente ainsi des surfaces en forme de pixels présentant différentes couleurs ou textures avec d'une part en abscisse la position angulaire de la (ou des) pièce(s) mobile(s) 3 et d'autre part en ordonnée une plage d'harmoniques prédéterminés correspondant au signal vibratoire. La couleur ou texture de chaque pixel est par ailleurs fonction d'une valeur de la variance synchrone correspondant à la plage de valeurs considérées en abscisse et en ordonnée. De plus telle que représentée, une échelle graduée associe à chaque valeur de la variance synchrone un code de couleur ou de texture.

Telle que représentée à la figure 5, une étape de cartographie 44 d'un procédé 40 peut comporter, pour chacune des cartographies $M_1$, $M_2$, une sous-étape de normalisation 140 permettant de normaliser les valeurs de la variance synchrone des accélérations. Une telle sous-étape de normalisation 140 permet alors d'assigner une valeur égale à 0 à un minimum de de la variance synchrone et une valeur égale à 1 à un maximum de la variance synchrone.

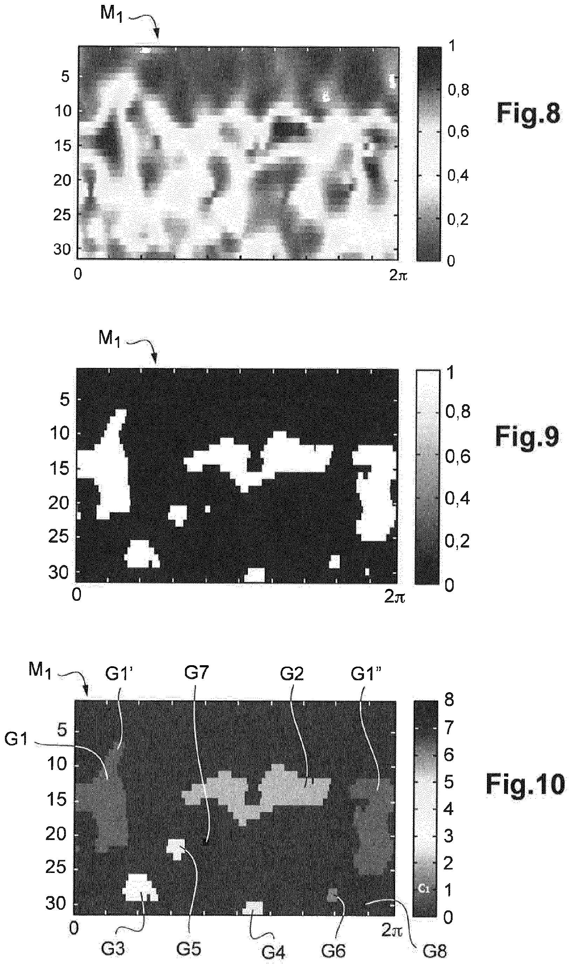

Le résultat obtenu après une telle sous-étape de normalisation 140 de la cartographie $M_1$ est alors tel que représenté à la figure 8 dans laquelle plusieurs pixels de différentes couleurs sont représentés en fonction d'une valeur de la variance synchrone correspondant à la plage de valeurs considérées en abscisse et en ordonnée.

L'étape de cartographie 44 du procédé 40 peut également comporter pour chacune des cartographies $M_1$, $M_2$, une sous-étape de discrétisation 141 permettant d'affecter une valeur égale 0 à chaque pixel représentatif initialement d'une valeur de la variance synchrone inférieure à une valeur de seuil prédéterminée h et d'affecter une valeur égale 1 chaque pixel représentatif initialement d'une valeur de la variance synchrone supérieure ou égale à la valeur de seuil prédéterminée h. Par exemple, une telle valeur de seuil h peut être choisie arbitrairement égale à 0,5.

Le résultat obtenu après une telle sous-étape de discrétisation 141 de la cartographie $M_1$ est alors tel que représenté à la figure 9 dans laquelle sont alors visibles des pixels de couleur blanche affectés respectivement d'une valeur égale à 1 et un fond noir correspondant aux pixels affectés respectivement d'une valeur égale à 0.

Enfin l'étape de cartographie 44 du procédé 40 peut également comporter une sous-étape de classification 142 pour classer en au moins deux classes C1-C8 au moins deux formes composées de pixels juxtaposés de couleur blanche appartenant à la cartographie $M_1$. De tels pixels sont alors agencés de manière jointive les uns à côtés des autres et sont affectés respectivement d'une valeur égale 1.

En outre telle que représentée à la figure 10, cette sous-étape de classification 142 permet par exemple d'identifier huit groupes de pixels G1-G8 affectés d'une valeur égale à 1 et de classer les au moins deux groupes G1, G2 suivant un ordre décroissant fonction d'un nombre de pixels juxtaposés affectés d'une valeur égale à 1 les constituant respectivement, une première classe C1 correspondant à un premier groupe G1, une deuxième classe C2 correspondant à un deuxième groupe G2 présentant un nombre de pixels juxtaposés affectés d'une valeur égale à 1 inférieur au nombre de pixels juxtaposés affectés d'une valeur égale à 1 du premier groupe G1.

Par ailleurs, une telle sous-étape de classification 142 permet de regrouper dans un même groupe des pixels affectés d'une valeur égale à 1 formant un premier sous-groupe G1' de pixels comportant au moins un pixel affecté d'une valeur égale à 1 touchant en abscisse l'origine de la cartographie $M_1$ et correspondant à une position angulaire de la (ou des) pièce(s) mobile(s) 3 égale à 0 radian et des pixels affectés d'une valeur égale à 1 formant un second sous-groupe G1" de pixels comportant au moins un pixel affecté d'une valeur égale à 1 touchant en abscisse la valeur $2\pi$ radians de la cartographie $M_1$ et correspondant à une position angulaire de la (ou des) pièce(s) mobile(s) 3 égale à $2\pi$ radians, le (ou les) pixel(s) du premier sous-groupe G1' présentant, à l'abscisse correspondant à la position angulaire de la (ou des) pièce(s) mobile(s) égale à 0 radian, une valeur d'harmonique égale à celle du (ou des) pixel(s) du second sous-groupe G1" à la position angulaire de la (ou des) pièce(s) mobile(s) 3 égale à $2\pi$ radians.

Selon l'exemple représenté à cette figure 10, la cartographie $M_1$ peut comporter huit groupes de pixels juxtaposés affectés d'une valeur égale à 1.

Telle que représentée à la figure 6, une étape d'analyse 45 d'un procédé 40 peut comporter, une première sous-étape de calcul 150 consistant à superposer les deux cartographies puis à déterminer, dans une superposition de la première cartographie $M_1$ avec la deuxième cartographie $M_2$, respectivement pour chaque classe C1-C8, une surface d'intersection S3 entre une première forme F1 correspondant à la classe C1 de la première cartographie $M_1$ et une deuxième forme F2 correspondant à la même classe C1 de la deuxième cartographie $M_2$.

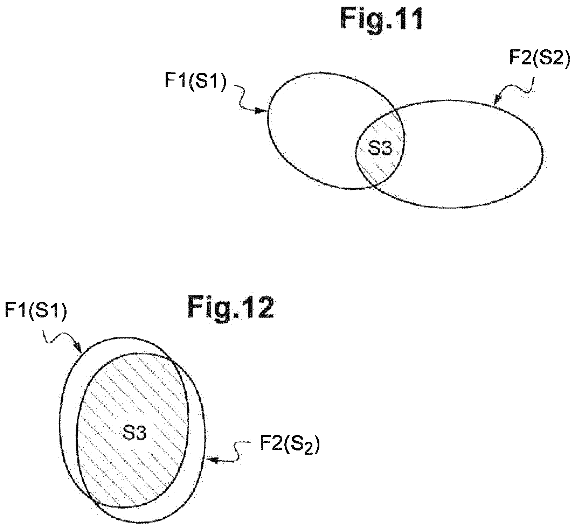

Une telle surface d'intersection S3 peut alors varier dans le temps et être telle que représentée aux figures 11 et 12 correspondant à deux superpositions distinctes d'une même classe C1 entre d'une part une première cartographie $M_1$ et une deuxième cartographie $M_2$ et d'autre part une troisième cartographie $M_3$ avec une quatrième cartographie $M_4$.

L'étape d'analyse 45 du procédé 40 peut ensuite comporter une deuxième sous-étape de calcul 151 consistant à calculer, dans la superposition de la première cartographie $M_1$ avec la deuxième cartographie $M_2$, respectivement pour chaque classe C1-C8 une surface d'exclusion S4 entre une première forme F1 correspondant à la classe C1-C8 considérée de la première cartographie $M_1$ et une deuxième forme F2 correspondant à la même classe C1-C8 considérée de la deuxième cartographie $M_2$. Une telle surface d'exclusion S4 est ainsi égale à la somme entre une première surface S1 de la première forme F1 et une deuxième surface S2 de la deuxième forme F2 à laquelle la surface d'intersection S3 est retranchée.

L'étape d'analyse 45 du procédé 40 peut également comporter une troisième sous-étape de calcul 152 consistant à calculer un score P égal à la différence entre la surface d'intersection S3 et la surface d'exclusion S4 précédemment calculées aux sous-étapes de calcul 150 et 151. Le score P est alors négatif selon l'exemple illustré à la figure 11 et positif selon l'exemple illustré à la figure 12

Enfin, l'étape d'analyse 45 du procédé 40 peut comporter une quatrième sous-étape de calcul 153 consistant à calculer respectivement pour chaque classe C1, C2, des valeurs courantes $CI_{t1}$, $CI_{t2}$ de l'indicateur CI par itération, une deuxième valeur courante $CI_{t2}$ de l'indicateur CI correspondant à la deuxième cartographie $M_2$ étant égale à un maximum entre la valeur 0 et la somme entre d'une part une première valeur courante $CI_{t1}$ de l'indicateur CI correspondant à la première cartographie $M_1$ et d'autre part un produit entre le score P et le temps écoulé dt entre les instants $t_2$ et $t_1$, conformément à l'équation :

$$\mathrm{CI_{t2}} = \max([0, \mathrm{CIt_1} + P.dt])$$

avec dt = $t_2$-$t_1$.

Par ailleurs, l'indicateur CI peut être avantageusement choisi égal à 0 à un instant initial $t_0$ correspondant au début de l'acquisition du signal vibratoire.

En fonction, des valeurs courantes $CI_{t1}$, $CI_{t2}$ de l'indicateur CI, on peut alors générer une alarme lorsque cette valeur courante $CI_{t1}$, $CI_{t2}$ du indicateur CI dépasse une valeur de seuil prédéterminée correspondant à la dégradation dans la (ou les) pièce(s) mobile(s) 3 du mécanisme tournant 2.

En outre, un tel procédé peut nécessiter un nombre minimal de mesures des accélérations par heure de vol afin de garantir une performance de détection de la dégradation dans la (ou les) pièce(s) mobile(s) 3. Un tel procédé peut également nécessiter une stabilité des paramètres de vol de l'aéronef et par exemple s'effectuer à une vitesse de rotation du rotor principal constante et/ou à un couple moteur d'entrainement du rotor principal constant.

Naturellement, la présente invention est sujette à de nombreuses variations quant à sa mise en œuvre.

Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que décrit par les revendications.

**Revendications**

1. Procédé (20, 30, 40) de surveillance et de détection de la formation d'une dégradation dans au moins une pièce mobile (3) d'un mécanisme tournant (2) formant tout ou partie d'une chaine cinématique de transmission d'un couple moteur, ledit mécanisme tournant (2) équipant un aéronef (1), ledit procédé (20, 30, 40) comportant :

   • au moins une première étape de mesure (21, 31) comportant une mesure des vibrations suivant au moins une direction et générant un signal vibratoire de fonctionnement dudit mécanisme tournant (2) en fonction du temps, ladite première étape de mesure (21, 31) étant réalisée au moyen d'au moins un capteur vibratoire (6) solidarisé avec un carter fixe (7) dudit aéronef (1),
   • au moins une seconde étape de mesure (22, 32) comportant une mesure d'une position angulaire de ladite au moins une pièce mobile (3), ladite au moins une pièce mobile (3) comportant au moins un degré de liberté en rotation autour d'un axe de rotation,

   **caractérisé en ce que** ledit procédé (20, 30, 40) comporte au moins :

   • une étape de prétraitement (23, 33) pour calculer une variance synchrone des vibrations du signal vibratoire mesurées par ledit au moins un capteur vibratoire (6) sur un cycle d'un nombre prédéterminé n de rotations de ladite au moins une pièce mobile (3) autour dudit axe de rotation, ladite variance synchrone étant déterminée à partir d'une moyenne des écarts au carré entre une valeur d'accélération mesurée à un instant prédéterminé et une valeur moyenne calculée audit même instant prédéterminé,
   • une étape de cartographie (24, 34, 44) pour générer au moins deux cartographies $M_1$, $M_2$ représentatives respectivement d'une valeur de ladite variance synchrone en fonction d'une part de ladite position angulaire de ladite au moins une pièce mobile (3) et d'autre part d'une plage d'harmoniques prédéterminés dudit signal vibratoire, lesdites au moins deux cartographies $M_1$, $M_2$ correspondant respectivement à des acquisitions successives de ladite variance synchrone à au moins deux instants $t_1$, $t_2$ distincts l'un de l'autre,

• une étape d'analyse (25, 35, 45) pour comparer lesdites valeurs de ladite variance synchrone entre au moins deux cartographies $M_1$, $M_2$ successives, ladite étape d'analyse (25, 35, 45) permettant de générer un indicateur CI en fonction d'une comparaison entre une première cartographie $M_1$ de ladite variance synchrone à un premier instant $t_1$ et une deuxième cartographie $M_2$ de ladite variance synchrone à un deuxième instant $t_2$ postérieur audit premier instant $t_1$, et

• une étape d'alarme (26, 36) pour générer une alarme lorsqu'une valeur courante $CI_{t1}$, $CI_{t2}$ dudit indicateur CI dépasse une valeur de seuil prédéterminée correspondant à ladite dégradation dans ladite au moins une pièce mobile (3) dudit mécanisme tournant (2).

2. Procédé selon la revendication 1, **caractérisé en ce que** ladite étape de prétraitement (33) est effectuée à bord de l'aéronef (1), ledit procédé (30) comportant une étape de transmission (37) de données permettant une transmission des données représentatives de ladite variance synchrone à au moins une station sol (14), lesdites étapes de cartographie (34), d'analyse (35) et d'alarme (36) étant quant à elles effectuées au sol en tout ou partie avec ladite station sol (14).

3. Procédé selon l'une quelconque des revendications 1 à 2, **caractérisé en ce que** ladite étape de cartographie (44) comporte, pour chacune desdites cartographies $M_1$, $M_2$, une sous-étape de normalisation (140) desdites valeurs de ladite variance synchrone, ladite sous-étape de normalisation (140) permettant d'assigner une valeur égale à 0 à des pixels représentatifs d'un minimum de ladite variance synchrone et une valeur égale à 1 à des pixels représentatifs d'un maximum de ladite variance synchrone, ladite sous-étape de normalisation (140) permettant d'assigner une valeur comprise entre 0 et 1 à l'ensemble des autres pixels représentatifs d'une valeur comprise entre ledit minimum et ledit maximum de la variance synchrone.

4. Procédé selon la revendication 3, **caractérisé en ce que** ladite étape de cartographie (44) comporte, pour chacune desdites cartographies $M_1$, $M_2$, une sous-étape de discrétisation (141) permettant d'affecter une valeur égale 0 à chaque pixel représentatif initialement d'une valeur de ladite variance synchrone inférieure à une valeur de seuil prédéterminée h et d'affecter une valeur égale 1 à chaque pixel représentatif initialement d'une valeur de ladite variance synchrone supérieure ou égale à ladite valeur de seuil prédéterminée h.

5. Procédé selon la revendication 4, **caractérisé en ce que** ladite étape de cartographie (44) comporte une sous-étape de classification (142) pour classer en au moins deux classes C1, C2 au moins deux formes composées de pixels juxtaposés appartenant à la pluralité de cartographies $M_1$, $M_2$, lesdits pixels étant affectés respectivement chacun d'une valeur égale 1, ladite sous-étape de classification (142) permettant d'identifier au moins deux groupes de pixels G1, G2 et de classer lesdits au moins deux groupes G1, G2 suivant un ordre décroissant fonction d'un nombre de pixels juxtaposés affectés d'une valeur égale à 1 les constituant respectivement, une première classe C1 correspondant à un premier groupe G1 et une deuxième classe C2 correspondant à un deuxième groupe G2 présentant un nombre de pixels juxtaposés affectés d'une valeur égale à 1 inférieur au nombre de pixels juxtaposés affectés d'une valeur égale à 1 dudit premier groupe G1.

6. Procédé selon la revendication 5, **caractérisé en ce que**, pour chacune desdites cartographies $M_1$, $M_2$, ladite sous-étape de classification (142) regroupe dans un même groupe des pixels affectés d'une valeur égale à 1 formant un premier sous-groupe G1' de pixels comportant au moins un pixel affecté d'une valeur égale à 1 touchant en abscisse l'origine de ladite cartographie $M_1$, $M_2$ et correspondant à une position angulaire de ladite au moins une pièce mobile (3) égale à 0 radian et des pixels affectés d'une valeur égale à 1 formant un second sous-groupe G1" de pixels comportant au moins un pixel affecté d'une valeur égale à 1 touchant en abscisse une valeur de $2\pi$ radians de ladite cartographie $M_1$, $M_2$ et correspondant à une position angulaire de ladite au moins une pièce mobile (3) inférieure à $2\pi$ radians, ledit au moins un pixel du premier sous-groupe G1' présentant, à l'abscisse correspondant à ladite position angulaire de ladite au moins une pièce mobile (3) égale à 0 radian, une valeur d'harmonique égale à celle dudit au moins un pixel du second sous-groupe G1" à ladite position angulaire de ladite au moins une pièce mobile (3) égale à $2\pi$ radians.

7. Procédé selon l'une quelconque des revendications 5 à 6, **caractérisé en ce que** ladite étape d'analyse (45) comporte une première sous-étape de calcul (150) consistant à calculer, dans une superposition de ladite première cartographie $M_1$ avec ladite deuxième cartographie $M_2$, respectivement pour chaque classe C1, C2 une surface d'intersection S3 entre une première forme F1 correspondant à ladite classe C1, C2 de ladite première cartographie $M_1$ et une deuxième forme F2 correspondant à ladite classe C1, C2 de ladite deuxième cartographie $M_2$.

**8.** Procédé selon la revendication 7, **caractérisé en ce que** ladite étape d'analyse (45) comporte une deuxième sous-étape de calcul (151) consistant à calculer, dans ladite superposition de ladite première cartographie $M_1$ avec ladite deuxième cartographie $M_2$, respectivement pour chaque classe C1, C2 une surface d'exclusion S4 entre ladite première forme F1 correspondant à ladite classe C1, C2 de la première cartographie $M_1$ et ladite deuxième forme F2 correspondant à ladite classe C1, C2 de la deuxième cartographie $M_2$, ladite surface d'exclusion S4 étant égale à la somme entre une première surface S1 de ladite première forme F1 et une deuxième surface S2 de ladite deuxième forme F2 à laquelle ladite surface d'intersection S3 est retranchée.

**9.** Procédé selon la revendication 8, **caractérisé en ce que** ladite étape d'analyse (45) comporte une troisième sous-étape de calcul (152) consistant à calculer un score P égal à la différence entre ladite surface d'intersection S3 et ladite surface d'exclusion S4.

**10.** Procédé selon la revendication 9, **caractérisé en ce que** ladite étape d'analyse (45) comporte une quatrième sous-étape de calcul (153) consistant à calculer respectivement pour chaque classe C1, C2, des valeurs courantes $CI_{t1}$, $CI_{t2}$ dudit indicateur CI par itération, une deuxième valeur courante $CI_{t2}$ dudit indicateur CI correspondant à ladite deuxième cartographie $M_2$ étant égale à un maximum entre la valeur 0 et la somme entre d'une part une première valeur courante $CI_{t1}$ dudit indicateur CI correspondant à ladite première cartographie $M_1$ et d'autre part un produit entre ledit score P et le temps écoulé dt entre les instants $t_2$ et $t_1$, conformément à l'équation :

$$CI_{t2} = \max([0, CIt_1 + P.dt])$$

avec dt = $t_2$-$t_1$.

**11.** Système (8) de surveillance et de détection de la formation d'une dégradation dans au moins une pièce mobile (3) d'un mécanisme tournant (2) formant tout ou partie d'une chaine cinématique de transmission d'un couple moteur, ledit mécanisme tournant (2) équipant un aéronef (1), ledit système (8) comportant :

• au moins un capteur vibratoire (6) pour mesurer des vibrations suivant au moins une direction et générer un signal vibratoire de fonctionnement dudit mécanisme tournant (2) en fonction du temps, ledit au moins un capteur vibratoire (6) étant solidarisé avec un carter fixe (7) dudit aéronef (1),
• au moins un organe de mesure (9) pour mesurer une position angulaire de ladite au moins pièce mobile (3), ladite au moins une pièce mobile (3) comportant au moins un degré de liberté en rotation autour d'un axe de rotation,

**caractérisé en ce que** ledit système (8) comporte au moins :

• une unité de prétraitement (10) pour calculer une variance synchrone des vibrations du signal vibratoire mesurées par ledit au moins un capteur vibratoire (6) sur un cycle d'un nombre prédéterminé n de rotations de ladite au moins une pièce mobile (3) autour dudit axe de rotation, ladite variance synchrone correspondant à une moyenne d'un écart au carré entre une valeur d'accélération mesurée à un instant prédéterminé et une valeur moyenne calculée audit même instant prédéterminé,
• une unité de cartographie (11) pour générer au moins deux cartographies $M_1$, $M_2$ représentatives respectivement d'une valeur de ladite variance synchrone en fonction d'une part de ladite position angulaire de ladite au moins une pièce mobile (3) et d'autre part d'une plage d'harmoniques prédéterminés dudit signal vibratoire, lesdites au moins deux cartographies $M_1$, $M_2$ correspondant respectivement à des acquisitions successives de ladite variance synchrone à au moins deux instants $t_1$, $t_2$ distincts l'un de l'autre,
• une unité d'analyse (12) pour comparer lesdites valeurs de ladite variance synchrone entre au moins deux cartographies $M_1$, $M_2$ successives, ladite unité d'analyse (12) permettant de générer un indicateur CI en fonction d'une comparaison entre une première cartographie $M_1$ de ladite variance synchrone à un premier instant $t_1$ et une deuxième cartographie $M_2$ de ladite variance à un deuxième instant $t_2$ postérieur audit premier instant $t_1$, et
• une unité d'alarme (13) pour générer une alarme lorsqu'une valeur courante $CI_{t1}$, $CI_{t2}$ dudit indicateur CI dépasse une valeur de seuil prédéterminée correspondant à ladite dégradation dans ladite au moins une pièce mobile (3) dudit mécanisme tournant (2).

**Patentansprüche**

**1.** Verfahren (20, 30, 40) zum Überwachen und Erfassen der Entstehung einer Verschlechterung in mindestens einem beweglichen Teil (3) eines Drehmechanismus (2), der die Gesamtheit oder einen Teil einer kinematischen Kette zur Übertragung eines Motordrehmoments bildet, wobei der Drehmechanismus (2) ein Luftfahrzeug (1) ausstattet, wobei das Verfahren (20, 30, 40) umfasst:

    • mindestens einen ersten Messschritt (21, 31), der eine Messung der Schwingungen in mindestens einer Richtung umfasst und ein Schwingungssignal des Betriebs des Drehmechanismus (2) in Abhängigkeit von der Zeit erzeugt, wobei der erste Messschritt (21, 31) mit Hilfe mindestens eines Schwingungssensors (6) durchgeführt wird, der an einem festen Gehäuse (7) des Luftfahrzeugs (1) befestigt ist,
    • mindestens einen zweiten Messschritt (22, 32), der eine Messung einer Winkelposition des mindestens einen beweglichen Teils (3) umfasst, wobei das mindestens eine bewegliche Teil (3) mindestens einen Freiheitsgrad der Drehung um eine Drehachse aufweist,

**dadurch gekennzeichnet, dass** das Verfahren (20, 30, 40) mindestens umfasst:

    • einen Vorverarbeitungsschritt (23, 33) zum Berechnen einer synchronen Varianz der Schwingungen des von dem mindestens einen Schwingungssensor (6) gemessenen Schwingungssignals über einen Zyklus einer vorgegebenen Anzahl n von Umdrehungen des mindestens einen beweglichen Teils (3) um die Drehachse, wobei die synchrone Varianz aus einem Mittelwert der quadrierten Abweichungen zwischen einem zu einem vorgegebenen Zeitpunkt gemessenen Beschleunigungswert und einem zu demselben vorgegebenen Zeitpunkt berechneten Mittelwert bestimmt wird,
    • einen Kartierungsschritt (24, 34, 44) zum Erzeugen von mindestens zwei Karten $M_1$, $M_2$, die jeweils einen Wert der synchronen Varianz in Abhängigkeit einerseits von der Winkelposition des mindestens einen beweglichen Teils (3) und andererseits von einem Bereich vorgegebener Oberwellen des Vibrationssignals darstellen, wobei die mindestens zwei Karten $M_1$, $M_2$ jeweils aufeinanderfolgenden Erfassungen der synchronen Varianz zu mindestens zwei voneinander verschiedenen Zeitpunkten t1, t2 entsprechen,
    • einen Analyseschritt (25, 35, 45), um die Werte der synchronen Varianz zwischen mindestens zwei aufeinanderfolgenden Karten $M_1$, $M_2$ zu vergleichen, wobei der Analyseschritt (25, 35, 45) es ermöglicht, einen Indikator CI in Abhängigkeit von einem Vergleich zwischen einer ersten Karte $M_1$ der synchronen Varianz zu einem ersten Zeitpunkt $t_1$ und einer zweiten Karte $M_2$ der synchronen Varianz zu einem zweiten Zeitpunkt $t_2$, der nach dem ersten Zeitpunkt $t_1$ liegt,

zu erzeugen, und
    • einen Alarmschritt (26, 36) zum Erzeugen eines Alarms, wenn ein aktueller Wert $CI_{t1}$, $CI_{t2}$ des Indikators CI einen vorgegebenen Schwellenwert überschreitet, der der Verschlechterung in dem mindestens einen beweglichen Teil (3) des Drehmechanismus (2) entspricht.

**2.** Verfahren nach Anspruch 1,
**dadurch gekennzeichnet, dass** der Vorverarbeitungsschritt (33) an Bord des Luftfahrzeugs (1) durchgeführt wird, wobei das Verfahren (30) einen Datenübertragungsschritt (37) umfasst, der die Übertragung der für die synchrone Abweichung repräsentativen Daten an mindestens eine Bodenstation (14) ermöglicht, wobei die Schritte der Kartierung (34), der Analyse (35) und des Alarms (36) ihrerseits ganz oder teilweise am Boden mit der Bodenstation (14) durchgeführt werden.

**3.** Verfahren nach einem der Ansprüche 1 bis 2,
**dadurch gekennzeichnet, dass** der Kartierungsschritt (44) für jede der Karten $M_1$, $M_2$ einen Unterschritt (140) der Normierung der Werte der synchronen Varianz umfasst, wobei der Unterschritt (140) der Normierung es ermöglicht, Pixeln, die ein Minimum der synchronen Varianz darstellen, einen Wert gleich 0 und Pixeln, die ein Maximum der synchronen Varianz darstellen, einen Wert gleich 1 zuzuweisen, wobei der Normierungs-Unterschritt (140) allen anderen Pixeln, die einen Wert zwischen dem Minimum und dem Maximum der synchronen Varianz darstellen, einen Wert zwischen 0 und 1 zuweist.

**4.** Verfahren nach Anspruch 3,
**dadurch gekennzeichnet, dass** der Kartierungsschritt (44) für jede der Karten $M_1$, $M_2$ einen Unterschritt (141) der Diskretisierung umfasst, um jedem Pixel, das anfänglich einen Wert der synchronen Varianz repräsentiert, der kleiner als ein vorgegebener Schwellenwert h ist, einen Wert gleich 0 zuzuweisen, und um jedem Pixel, das anfänglich einen Wert der synchronen Varianz repräsentiert, der größer als oder gleich dem vorgegebenen Schwellenwert h ist, einen Wert gleich 1 zuzuweisen.

**5.** Verfahren nach Anspruch 4,
**dadurch gekennzeichnet, dass** der Kartierungsschritt (44) einen Unterschritt (142) der Klassifizierung von mindestens zwei Formen, die aus nebeneinander liegenden Pixeln bestehen, die zu der Mehrzahl von Karten $M_1$, $M_2$ gehören, in mindestens zwei Klassen C1, C2 umfasst, wobei den Pixeln jeweils der gleiche Wert 1 zugewiesen wird, wobei der Unterschritt (142) der Klassifizierung es ermöglicht, mindestens zwei Gruppen von Pixeln G1, G2 zu identifizieren und die mindestens zwei Gruppen G1, G2 in einer absteigenden Reihenfolge in Abhängigkeit von einer Anzahl nebeneinanderliegender Pixel mit zugewiesenem Wert gleich 1, die sie jeweils bilden, zu klassifizieren, wobei eine erste Klasse C1 einer ersten Gruppe G1 entspricht und eine zweite Klasse C2 einer zweiten Gruppe G2 entspricht, die eine Anzahl nebeneinanderliegender Pixel mit zugewiesenem Wert gleich 1 aufweist, die kleiner ist als die Anzahl nebeneinanderliegender Pixel mit zugewiesenem Wert gleich 1 der ersten Gruppe G1.

6. Verfahren nach Anspruch 5,
   **dadurch gekennzeichnet, dass** für jede der Karten $M_1$, $M_2$ der Unterschritt (142) der Klassifizierung Pixel mit zugewiesenem Wert gleich 1, die eine erste Untergruppe G1' von Pixeln bilden, die mindestens ein Pixel mit zugewiesenem Wert gleich 1, das an der Abszisse den Ursprung der Karte $M_1$, $M_2$ berührt und einer Winkelposition des mindestens einen beweglichen Teils (3) gleich 0 rad entspricht, und Pixel mit zugewiesenem Wert gleich 1, die eine zweite Untergruppe G1" von Pixeln bilden, die mindestens ein Pixel mit zugewiesenem Wert gleich 1 umfasst, dem ein Wert gleich 1 zugewiesen ist, der an der Abszisse einen Wert von $2\pi$ rad der Karte $M_1$, $M_2$ berührt und einer Winkelposition des mindestens einen beweglichen Teils (3) kleiner als $2\pi$ rad entspricht, in derselben Gruppe zusammenfasst, wobei das mindestens eine Pixel der ersten Untergruppe G1' an der Abszisse, die der Winkelposition des mindestens einen beweglichen Teils (3) von 0 rad entspricht, einen Oberwellenwert aufweist, der gleich dem des mindestens einen Pixels der zweiten Untergruppe G1" an der Winkelposition des mindestens einen beweglichen Teils (3) von $2\pi$ rad ist.

7. Verfahren nach einem der Ansprüche 5 bis 6,
   **dadurch gekennzeichnet, dass** der Analyseschritt (45) einen ersten Berechnungs-Unterschritt (150) umfasst, der darin besteht, in einer Überlagerung der ersten Karte $M_1$ mit der zweiten Karte $M_2$ jeweils für jede Klasse C1, C2 eine Schnittfläche S3 zwischen einer ersten Form F1, die der Klasse C1, C2 der ersten Karte $M_1$ entspricht, und einer zweiten Form F2, die der Klasse C1, C2 der zweiten Karte $M_2$ entspricht, zu berechnen.

8. Verfahren nach Anspruch 7,
   **dadurch gekennzeichnet, dass** der Analyseschritt (45) einen zweiten Berechnungs-Unterschritt (151) umfasst, der darin besteht, in der Überlagerung der ersten Karte $M_1$ mit der zweiten Karte M2 jeweils für jede Klasse C1, C2 eine Ausschlussfläche S4 zwischen der der Klasse C1 C2 entsprechenden ersten Form F1 der Karte $M_1$ und der der Klasse C1, C2 entsprechenden zweiten Form F2 der zweiten Karte M2 zu berechnen, wobei die Ausschlussfläche S4 gleich der Summe zwischen einer ersten Fläche S1 der ersten Form F1 und einer zweiten Fläche S2 der zweiten Form F2 ist, von der die Schnittfläche S3 abgezogen ist.

9. Verfahren nach Anspruch 8,
   **dadurch gekennzeichnet, dass** der Analyseschritt (45) einen dritten Berechnungs-Unterschritt (152) zum Berechnen einer Punktzahl P gleich der Differenz zwischen der Schnittfläche S3 und der Ausschlussfläche S4 umfasst.

10. Verfahren nach Anspruch 9,
    **dadurch gekennzeichnet, dass** der Analyseschritt (45) einen vierten Berechnungs-Unterschritt (153) umfasst, der darin besteht, für jede Klasse C1, C2 jeweils die aktuellen Werte $CI_{t1}$, $CI_{t2}$ des Indikators CI durch Iteration zu berechnen, wobei ein der zweiten Karte $M_2$ entsprechender zweiter aktueller Wert $CI_{t2}$ des Indikators CI gleich einem Maximum zwischen dem Wert 0 und der Summe zwischen einerseits einem der ersten Karte $M_1$ entsprechenden ersten aktuellen Wert $CI_{t1}$ des Indikators CI und andererseits einem Produkt aus der Punktzahl P und der zwischen den Zeitpunkten $t_2$ und $t_1$ verstrichenen Zeit dt gemäß der Gleichung :

$$CI_{t2} = \max([0, CIt_1 + P.dt])$$

ist, wobei dt = $t_2$-$t_1$.

11. System (8) zum Überwachen und Erfassen der Entstehung einer Verschlechterung in mindestens einem beweglichen Teil (3) eines Drehmechanismus (2), der die Gesamtheit oder einen Teil einer kinematischen Kette zur Übertragung eines Motordrehmoments bildet, wobei der Drehmechanismus (2) ein Luftfahrzeug (1) ausstattet, wobei das System (8) umfasst:

    • mindestens einen Schwingungssensor (6) zum Messen von Schwingungen in mindestens einer Richtung und zum Erzeugen eines Schwingungssignals des Betriebs des Drehmechanismus (2) in Abhängigkeit von der Zeit, wobei der mindestens eine Schwingungssensor (6) an einem festen Gehäuse (7) des Luftfahrzeugs (1) befestigt ist,
    • mindestens eine Messeinrichtung (9) zum Messen einer Winkelposition des mindestens einen beweglichen Teils (3), wobei das mindestens eine bewegliche Teil (3) mindestens einen Freiheitsgrad der Drehung um eine Drehachse aufweist,

    **dadurch gekennzeichnet, dass** das System (8) mindestens umfasst:

    • eine Vorverarbeitungseinheit (10) zum Berechnen einer synchronen Varianz der Schwingungen des von dem mindestens einen Schwingungssensor (6) gemessenen Schwingungssignals über einen Zyklus einer vorgegebenen Anzahl n von Umdrehungen des mindestens einen beweglichen Teils (3) um die Drehachse, wobei die synchrone Varianz einem Mittelwert einer quadrierten Abweichung zwischen einem zu einem vorgegebenen Zeitpunkt gemessenen Beschleunigungswert und einem zu demselben vorgegebenen Zeitpunkt berechneten Mittelwert entspricht,

• eine Kartierungseinheit (11) zum Erzeugen von mindestens zwei Karten $M_1$, $M_2$, die jeweils einen Wert der synchronen Varianz in Abhängigkeit einerseits von der Winkelposition des mindestens einen beweglichen Teils (3) und andererseits von einem Bereich vorgegebener Oberwellen des Vibrationssignals darstellen, wobei die mindestens zwei Karten $M_1$, $M_2$ jeweils aufeinanderfolgenden Erfassungen der synchronen Varianz zu mindestens zwei voneinander verschiedenen Zeitpunkten t1, t2 entsprechen,

• eine Analyseeinheit (12) zum Vergleichen der Werte der synchronen Varianz zwischen mindestens zwei aufeinanderfolgenden Karten $M_1$, $M_2$, wobei die Analyseeinheit (12) es ermöglicht, einen Indikator C1 in Abhängigkeit von einem Vergleich zwischen einer ersten Karte $M_1$ der synchronen Varianz zu einem ersten Zeitpunkt $t_1$ und einer zweiten Karte $M_2$ der Varianz zu einem zweiten Zeitpunkt $t_2$ nach dem ersten Zeitpunkt $t_1$ zu erzeugen, und

• eine Alarmeinheit (13) zum Erzeugen eines Alarms, wenn ein aktueller Wert $CI_{t1}$, $CI_{t2}$ des Indikators CI einen vorgegebenen Schwellenwert überschreitet, der der Verschlechterung in dem mindestens einen beweglichen Teil (3) des Drehmechanismus (2) entspricht.

**Claims**

1. Method (20, 30, 40) for monitoring and detecting the formation of degradation in at least one moving part (3) of a rotating mechanism (2) forming all or part of a kinematic chain for transmission of an engine torque, the said rotating mechanism (2) being fitted to an aircraft (1), the said method (20, 30, 40) comprising:

   • at least one first measurement step (21, 31) comprising a measurement of the vibrations along at least one direction and generating a operational vibration signal of the said rotating mechanism (2) as a function of time, the said first measurement step (21, 31) being carried out by means of at least one vibration sensor (6) secured to a fixed casing (7) of the said aircraft (1),

   • at least one second measurement step (22, 32) comprising a measurement of an angular position of the said at least one moving part (3), the said at least one moving part (3) having at least one degree of freedom in rotation about an axis of rotation,

   **characterised in that** the said method (20, 30, 40) comprises at least:

   • a preprocessing step (23, 33) for calculating a synchronous variance of the vibrations of the vibration signal which are measured by the said at least one vibration sensor (6) over a cycle of a predetermined number n of rotations of the said at least one moving part (3) about the said axis of rotation, the said synchronous variance being determined on the basis of a mean squared difference between an acceleration value measured at a predetermined instant and a mean value calculated at the same said predetermined instant,

   • a mapping step (24, 34, 44) for generating at least two maps $M_1$, $M_2$ respectively representing a value of the said synchronous variance as a function on the one hand of the said angular position of the said at least one moving part (3) and on the other hand of a range of predetermined harmonics of the said vibration signal, the said at least two maps $M_1$, $M_2$ respectively corresponding to successive acquisitions of the said synchronous variance at two instants $t_1$, $t_2$ that are different from one another,

   • an analysis step (25, 35, 45) for comparing the said values of the said synchronous variance between at least two successive maps $M_1$, $M_2$, the said analysis step (25, 35, 45) making it possible to generate an indicator CI as a function of a comparison between a first map $M_1$ of the said synchronous variance at a first instant $t_1$ and a second map $M_2$ of the said synchronous variance at a second instant $t_2$ following the said first instant $t_1$, and

   • an alarm step (26, 36) for generating an alarm when a current value $CI_{t1}$, $CI_{t2}$ of the said indicator CI exceeds a predetermined threshold value corresponding to the said degradation in the said at least one moving part (3) of the said rotating mechanism (2).

2. Method according to Claim 1, **characterised in that** the said preprocessing step (33) is carried out on-board the aircraft (1), the said method (30) comprising a data transmission step (37) making it possible to transmit data representing the said synchronous variance to at least one ground station (14), the said mapping (34), analysis (35) and alarm (36) steps being for their part carried out on the ground entirely or partly with the said ground station (14).

3. Method according to either of Claims 1 and 2, **characterised in that** the said mapping step (44) comprises, for each of the said maps $M_1$, $M_2$, a substep (140) of normalising the said values of the said synchronous variance, the said normalisation substep (140) making it possible to assign a value equal to 0 to pixels representing a minimum of the said synchronous variance and a value equal to 1 to pixels representing a maximum of the said synchronous variance, the said normalisation substep (140) making it possible to assign a value between 0 and 1 to all the other pixels representing a value lying between the said minimum and the said maximum of the synchronous variance.

4. Method according to Claim 3, **characterised in that** the said mapping step (44) comprises, for each of the said maps $M_1$, $M_2$, a discretisation substep (141) making it possible to allocate a value equal to 0 to each pixel initially representing a value of the said synchronous variance less than a predetermined threshold value h and to allocate a value equal to 1 to each pixel initially representing a value of the said synchronous variance greater than or equal to the said predetermined threshold value h.

5. Method according to Claim 4, **characterised in that** the said mapping step (44) comprises a classification substep (142) for classifying at least two shapes composed of juxtaposed pixels belonging to the plurality of maps $M_1$, $M_2$ into at least two classes C1, C2, the said pixels each respectively being allocated a value equal to 1, the said classification substep (142) making it possible to identify at least two groups of pixels G1, G2 and to sort the said at least two groups G1, G2 in a decreasing order as a function of a number of juxtaposed pixels allocated a value equal to 1 respectively constituting them, a first class C1 corresponding to a first group G1 and a second class C2 corresponding to a second group G2 having a number of juxtaposed pixels allocated a value equal to 1 that is less than the number of juxtaposed pixels allocated a value equal to 1 of the said first group G1.

6. Method according to Claim 5, **characterised in that**, for each of the said maps $M_1$, $M_2$, the said classification substep (142) groups together in the same group pixels allocated a value equal to 1 forming a first subgroup G1' of pixels comprising at least one pixel allocated a value equal to 1 touching the origin of the said map $M_1$, $M_2$ on the abscissa and corresponding to an angular position of the said at least one moving part (3) equal to 0 radians, and pixels allocated a value equal to 1 forming a second subgroup G1" of pixels touching a value of 2n radians of the said map $M_1$, $M_2$ on the abscissa and corresponding to an angular position of the said at least one moving part (3) of less than 2n radians, the said at least one pixel of the first subgroup G1' having, at the abscissa corresponding to the said angular position of the said at least one moving part (3) equal to 0 radians, a harmonic value equal to that of the said at least one pixel of the second subgroup G1" at the said angular position of the said at least one moving part (3) equal to 2n radians.

7. Method according to either of Claims 5 and 6, **characterised in that** the said analysis step (45) comprises a first calculation substep (150) consisting in calculating, in a superposition of the said first map $M_1$ with the said second map $M_2$, respectively for each class C1, C2, a surface of intersection S3 between a first shape F1 corresponding to the said class C1, C2 of the said first map $M_1$ and a second shape F2 corresponding to the said class C1, C2 of the said second map $M_2$.

8. Method according to Claim 7, **characterised in that** the said analysis step (45) comprises a second calculation substep (151) consisting in calculating, in the said superposition of the said first map $M_1$ with the said second map $M_2$, respectively for each class C1, C2, an exclusion surface S4 between the said first shape F1 corresponding to the said class C1, C2 of the said first map $M_1$ and the said second shape F2 corresponding to the said class C1, C2 of the said second map $M_2$, the said exclusion surface S4 being equal to the sum between a first surface S1 of the said first shape F1 and a second surface S2 of the said second shape F2, from which the said intersection surface S3 is subtracted.

9. Method according to Claim 8, **characterised in that** the said analysis step (45) comprises a third calculation substep (152) consisting in calculating a score P equal to the difference between the said intersection surface S3 and the said exclusion surface S4.

10. Method according to Claim 9, **characterised in that** the said analysis step (45) comprises a fourth calculation substep (153) consisting in calculating, respectively for each class C1, C2, current values $CI_{t1}$, $CI_{t2}$ of the said indicator CI by iteration, a second current value $CI_{t2}$ of the said indicator CI corresponding to the said second map $M_2$ being equal to a minimum between the value 0 and the sum between on the one hand a first current value $CI_{t1}$ of the said indicator CI corresponding to the said first map $M_1$ and on the other hand a product between the said score P and the time dt elapsed between the instants $t_2$ and $t_1$, according to the equation:

$$CI_{t2} = max([0, CI_{t1}+P.dt])$$

with dt = $t_2$ - $t_1$.

11. System (8) for monitoring and detecting the formation of degradation in at least one moving part (3) of a rotating mechanism (2) forming all or part of a kinematic chain for transmission of an engine torque, the said rotating mechanism (2) being fitted to an aircraft (1), the said system (8) comprising:

• at least one vibration sensor (6) for measuring vibrations along at least one direction and generating a operational vibration signal of the said rotating mechanism (2) as a function of time, the said at least one vibration sensor (6) being secured to a fixed casing (7) of the said aircraft (1),
• at least one measuring component for measuring an angular position of the said at least one moving part (3), the said at least one moving part (3) having at least one degree of freedom in rotation about an axis of rotation,

characterised in that the said system (8) comprises at least:

• a preprocessing unit (10) for calculating a synchronous variance of the vibrations of the vibration signal which are measured by the said at least one vibration sensor (6) over a cycle of a predetermined number n of rotations of the said at least one moving part (3) about the said axis of rotation, the said synchronous variance corresponding to a mean squared difference between an acceleration value measured at a predetermined instant and a mean value calculated at the same said predetermined instant,
• a mapping unit (11) for generating at least two maps $M_1$, $M_2$ respectively representing a value of the said synchronous variance as a function on the one hand of the said angular position of the said at least one moving part (3) and on the other hand a range of predetermined harmonics of the said vibration signal, the said at least two maps $M_1$, $M_2$ respectively corresponding to successive acquisitions of the said synchronous variance at two instants $t_1$, $t_2$ that are different from one another,
• an analysis unit (12) for comparing the said values of the said synchronous variance between at least two successive maps $M_1$, $M_2$, the said analysis unit (12) making it possible to generate an indicator CI as a function of a comparison between a first map $M_1$ of the said synchronous variance at a first instant $t_1$ and a second map $M_2$ of the said synchronous variance at a second instant $t_2$ following the said first instant $t_1$, and
• an alarm unit (13) for generating an alarm when a current value $CI_{t1}$, $CI_{t2}$ of the said indicator CI exceeds a predetermined threshold value corresponding to the said degradation in the said at least one moving part (3) of the said rotating mechanism (2).

Fig.1

Fig.2

Fig.3

Fig.4

**Fig.5**

40

44 — 140
141
142

**Fig.6**

40

150
151
152 — 45
153

**Fig.7**

M₁

M₁

Fig.8

M₁

Fig.9

M₁  G1'  G7  G2  G1"

G1

Fig.10

G3  G5  G4  G6  G8

Fig.11

Fig.12

**EP 3 531 098 B1**

## RÉFÉRENCES CITÉES DANS LA DESCRIPTION

**Documents brevets cités dans la description**

- WO 2015086959 A
- WO 2004059399 A
- EP 3106846 A
- WO 2004065927 A
- US 7325461 B
- US 7363172 B
- US 20110046929 A